# EUROPÄISCHE PATENTSCHRIFT

(11) **EP 0 943 511 B1**
(45) Veröffentlichungstag und Bekanntmachung des Hinweises auf die Patenterteilung: **24.09.2003**
(21) Anmeldenummer: 99102049.6
(22) Anmeldetag: 02.02.1999
(51) Int. Cl.: B60S 1/38

(54) **Wischblatt für eine Scheibenwischvorrichtung**
Wiper blade for a windscreen wiping device
Balai d'essuie-glace pour dispositif d'essuie-glace

(30) Priorität: 18.03.1998 DE 19811701
(43) Veröffentlichungstag der Anmeldung: 22.09.1999
(73) Patentinhaber: Valeo Wischersysteme GmbH, 74321 Bietigheim-Bissingen (DE)
(72) Erfinder: Herrmann, Volker, 97941 Tauberbischofsheim (DE); Egner-Walter, Bruno, 74076 Heilbronn (DE)
(74) Vertreter: Dreiss, Fuhlendorf, Steimle & Becker

(56) Entgegenhaltungen:
- EP-A- 0 461 987
- EP-A- 0 646 507
- WO-A-97/00796
- DE-A- 19 725 083
- DE-A- 19 735 300
- DE-U- 9 201 307

## Beschreibung

Die Erfindung bezieht sich auf ein Wischblatt für eine Scheibenwischvorrichtung zum Reinigen einer Scheibe an einem Fahrzeug, wobei das Wischblatt mit den Merkmalen des Oberbegriffs des Anspruchs 1 ausgestattet ist. Weiterhin bezieht sich die Erfindung auf einen komplett vormontierten Austauschsatz für ein solches Wischblatt, der die Merkmale des Oberbegriffs des Anspruchs 13 aufweist.

Ein Wischblatt und ein Austauschsatz dieser Art sind bereits aus der WO-A- 97/00796 bekannt. Bei diesem Wischblatt ist die austauschbare Wischleiste aus elastischem, gummiartigen Material mit ihrer Kopfleiste in den Haltekrallen eines langgestreckten, mehrgliedrigen Traggestells gehalten, indem die Haltekrallen die Kopfleiste teilweise von oben umfassen und in Längsnuten eingreifen, die an den gegenüberliegenden Längsseiten der Kopfleiste ausgebildet sind. Die Arretierung in Längsrichtung der Wischleiste erfolgt über eine an einem Ende der Kopfleiste befestigte, aus Blech gefertigte Federklammer, die mit wenigstens einem elastisch auslenkbaren Arm eine Haltekralle des Traggestells quert und mit einem in der Ebene des Blechmaterials ausgebildeten Haken die Haltekralle hintergreift. In vorteilhaft einfacher Weise kann eine mit einer Federschiene und einer an der Kopfleiste befestigten Federklammer zu einem vormontierten Austauschsatz komplettierte Wischleiste durch Einschieben in ihre Längsrichtung in die Krallen des Traggestells an diesem montiert werden.

Die Verrastung des wenigstens einen, mit einem Haken ausgestatteten Arm der Federklammer an der Haltekralle des Traggestells erfolgt dabei unter der Wirkung der Einschubkraft selbsttätig.

Problematisch ist jedoch die einer Montage einer neuen Wischleiste zwangsweise vorangestellte Demontage der zu ersetzenden Wischleiste. Durch eine manuelle Handhabung muß hierbei der wenigstens eine, mit einem Rasthaken die Haltekralle des Traggestells hintergreifende Arm der Federklammer entgegen seinen elastischen Rückstellkräften ausgelenkt werden, um die Arretierung zu lösen. Gleichzeitig muß die Wischleiste in Auszugsrichtung aus den Haltekrallen des Traggestells herausgezogen werden. Diese Handhabung ist für den Ausführenden mit gewissen Schwierigkeiten verbunden, insbesondere dann, wenn die Federklammer zwei Haltearme besitzt, die gleichzeitig ausgelenkt werden müssen. Entweder muß diese Handhabung mit geeigneten Werkzeugen ausgeführt werden, oder es besteht eine akute Verletzungsgefahr, wenn diese Handhabung ohne Werkzeug ausgeführt wird.

Aufgabe der Erfindung ist es, ein Wischblatt der eingangs beschriebenen Art dahingehend zu verbessern, daß sowohl die Montage- als auch die Demontagearbeiten beim Austausch der Wischleiste bzw. des Austauschsatzes einfacher ausführbar sind und keine besondere handwerkliche Begabung der ausführenden Person erfordern. Außerdem soll ein einfach handzuhabender Austauschsatz für ein Wischblatt bereitgestellt werden.

Erfindungsgemäß wird die Aufgabe durch ein Wischblatt mit den Merkmalen des Anspruchs 1 bzw. durch einen Austauschsatz mit den Merkmalen des Anspruchs 13 gelöst. Das Wesen der Erfindung besteht darin, die auf der zu der Wischleiste gehörenden Kopfleiste befestigte Endklammer so zu gestalten, daß zum Herstellen bzw. zum Lösen der Längsarretierung der Wischleiste am Traggestell lediglich eine Kraft in die eine bzw. in die andere Längsrichtung in bezug auf die Wischleiste auf die Endklammer aufgebracht werden muß. Dieses wird erfindungsgemäß dadurch erreicht, daß das Anschlagmittel an dem wenigstens einen Haltearm der Endklammer ein Vorsprung mit einer Einführungsfläche und mit einer Auszugsfläche ist, die in bezug auf die Längsrichtung der Kopfleiste jeweils eine zueinander gegenläufige Steigung aufweisen und im Zusammenwirken mit der Endkralle des Traggestells beim Einschieben der Kopfleiste in das Traggestell und beim Ausziehen der Kopfleiste aus dem Traggestell selbsttätig ein vorübergehendes elastisches Auslenken des wenigstens einen Haltearmes aus seiner Normalstellung herbeiführen, so daß der Vorsprung die Endkralle passieren kann. Die für den Ausbau der Wischleiste aus dem Traggestell und den Einbau einer neuen Wischleiste in das Traggestell erforderlichen Handhabungen sind von einfachster Art, weil dabei eine manuelle Betätigung von Rastelementen entfällt. Sie können deshalb problemlos auch von ungeübten Personen durchgeführt werden.

Vorteilhafte Ausgestaltungen der Erfindung ergeben sich aus den Unteransprüchen. Eine Ausgestaltung der Erfindung nach Anspruch 2 ermöglicht es, daß die aus Blech gefertigte Endklammer aufgrund der möglichen geringen Materialdicke flach an der Außenkontur der Kopfleiste anliegen kann. Dadurch ist die Endklammer visuell unauffällig und erfordert nur einen geringen Materialeinsatz. Außerdem treten wegen der Flachheit des Materials keine spürbaren störenden Einflüsse auf das Strömungsverhalten des Wischblattes in bezug auf den anströmenden Wind auf.

Während eine Ausgestaltung der Erfindung nach Anspruch 3 eine dauerhaft sichere Befestigung der Endklammer an dem zu der Wischleiste gehörenden Kopfteil gewährleistet, ist eine Ausgestaltung der Erfindung gemäß Anspruch 4 in bezug auf die Herstellung und die Montage der Endklammer an der Kopfleiste besonders kostengünstig. Bei einer Ausgestaltung der Erfindung gemäß Anspruch 5 übernimmt die Endklammer gleichzeitig die Funktion, die an der Kopfleiste anzubringenden Federschienen zu sichern und an einer Stelle gegen Längsverschiebung relativ zu der Kopfleiste zu arretieren. Durch diese Funktionsverschmelzung in der Endklammer werden zusätzliche Bauteile überflüssig, welche ansonsten diese Funktion ausüben müßten.

Von besonderem Vorteil ist eine Ausgestaltung gemäß Anspruch 6. Diese ermöglicht, daß die Größe der für das Ausziehen der Kopfleiste aus den Haltekrallen des Traggestells erforderliche Auszugskraft eine für das Wischblatt vorgebbare Bedingung darstellt. Diese vorgegebene bzw. gewünschte Größe der Auszugskraft wird in einfacher Weise durch eine entsprechende Gestaltung der Höhe des Vorsprunges an dem wenigstens einen Haltearm der Endklammer und/oder der Steigung der Auszugsfläche des Vorsprunges in bezug auf die Längsrichtung der Kopfleiste erreicht. Um hierbei einerseits mit Sicherheit ein ungewolltes Herausgleiten der Wischleiste aus dem Traggestell auszuschließen und andererseits die Herstellung der Längsarretierung der Wischleiste an dem Traggestell mit möglichst geringer Kraft zu ermöglichen, wird die Auszugsfläche des Vorsprunges an dem wenigstens einen Haltearm der Endklammer mit einer größeren Steigung ausgestattet als die der Einführungsfläche.

Eine Ausgestaltung der Erfindung gemäß Anspruch 7 sieht vor, daß die Einführungsfläche und/oder die Auszugsfläche des Vorsprungs an dem wenigstens einen Haltearm der Endklammer konvex und/oder konkav gewölbt ist. Diese Ausgestaltung bietet vielerlei Variationsmöglichkeiten hinsichtlich der anzuwendenden Kräfte oder Kraftverläufe bei der Herstellung oder beim Lösen der Längsarretierung der Wischleiste bzw. der Endklammer am Traggestell des Wischblattes. Diese Kräfte oder Kraftverläufe sind somit in einfacher Weise optimal für den entsprechenden Wischblatttyp anpaßbar.

Eine Ausgestaltung der Erfindung gemäß Anspruch 8 hat den Vorteil, daß der an dem wenigstens einen Haltearm der Endklammer vorgesehene Vorsprung in einfacher Weise und mit geringstem Materialeinsatz herstellbar ist.

Eine Ausgestaltung der Erfindung gemäß Anspruch 9 erhöht wesentlich die Sicherheit gegen ungewolltes Lösen der Längsarretierung der Wischleiste am Traggestell. Insbesondere bestehen hier keine Angriffsmöglichkeiten für die Bürsten von automatischen Waschanlagen. Außerdem ermöglicht diese Ausgestaltung eine eng an die Außenfläche der Kopfleiste angeschmiegte und damit äußerst wenig auftragende Gestalt der Halteklammer.

Eine Ausgestaltung der Erfindung gemäß Anspruch 10 ist besonders dann von Vorteil, wenn die elastischen Rückstellkräfte des wenigstens einen Haltearmes der Endklammer keine ausreichende Sicherheit für die Längsarretierung am Traggestell gewährleisten. Dadurch, daß der wenigstens eine Haltearm der Endklammer an der Außenseite der zu der Wischleiste gehörenden Kopfleiste anliegt, muß der Haltearm, um die Innenseite der Haltekralle des Traggestells passieren zu können, zumindest partiell in die Kopfleiste eingedrückt werden. Dabei müssen zusätzlich die elastischen Rückstellkräfte der Kopfleiste überwunden werden. Die Sicherheit der Längsarretierung der Wischleiste in dem Traggestell wird also durch die elastischen Rückstellkräfte des Materials der Wischleiste bzw. der Kopfleiste erhöht.

Eine Ausgestaltung der Erfindung nach Anspruch 11, wonach die Endklammer mit zwei Haltearmen ausgebildet ist, die entlang der gegenüberliegenden Längsseiten der zu der Wischleiste gehörenden Kopfleiste verlaufen, ist eine bessere Verteilung der Haltekräfte der Wischleiste an dem Traggestell gewährleistet.

Für eine Erleichterung des Einbaus einer neuen Wischleiste in das Traggestell bzw. der Herbeiführung der selbsttätigen Verrastung des wenigstens einen Haltearmes der Endklammer an dem Traggestell ist gemäß einer Ausgestaltung der Erfindung nach Anspruch 12 vorgesehen, daß an der betreffenden Endkralle des Traggestells eine Einführungsschräge für den wenigstens einen Haltearm der Endklammer ausgebildet ist. Vorteilhaft ist hier sogar an den beiden gegenüberliegenden Endkrallen eines Traggestells eine gleiche Einführungsschräge auszubilden, unabhängig davon, daß jeweils nur eine davon benutzt wird. Zum einen vereinfacht sich dadurch die Herstellung des Traggestells, weil gleiche Teile verwendet werden, andererseits muß bei einem symmetrisch umschlagbaren Traggestell nicht gesondert auf eine lagerichtige Montage des Wischgummis am Traggestell geachtet werden.

Es wird noch darauf hingewiesen, daß die Erfindung entsprechend dem unabhängigen Anspruch 13 auch allein auf einen Austauschsatz für ein Wischblatt gerichtet ist. Dieser Austauschsatz für ein Wischblatt einer Scheibenwischvorrichtung zum Reinigen einer Scheibe an einem Fahrzeug, wobei zu dem komplett vormontierten Austauschsatz eine Wischleiste aus elastischem, gummiartigen Material, eine oder mehrere in der zu der Wischleiste gehörenden Kopfleiste angeordnete und gehaltene Federschiene bzw. Federschienen und eine auf einem Ende der Kopfleiste befestigte Endklammer zum Fixieren der Federschiene bzw. Federschienen an der Kopfleiste und zur Längsarretierung der Wischleiste an dem Traggestell des Wischblattes gehören, wobei die Endklammer wenigstens einen sich in Längsrichtung der Kopfleiste erstreckenden Haltearm besitzt, der nach der Montage des Austauschsatzes an dem Traggestell die zugeordnete Endkralle des Traggestells quert und mit einem Anschlagmittel die innere Stirnseite der Endkralle hintergreift, ist dadurch gekennzeichnet, daß der Austauschsatz mit den kennzeichnenden Merkmalen eines der Ansprüche 1 bis 11 ausgebildet ist.

Anhand einer Zeichnung werden nachfolgend weitere Einzelheiten der Erfindung näher beschrieben. Es zeigen:
- Fig. 1: in perspektivischer Darstellung einen Endabschnitt eines erfindungsgemäßen Wischblattes,
- Fig. 2: in perspektivischer Darstellung eine in Fig. 1 verwendete Endklammer,
- Fig. 3: in Schnittdarstellung entlang der Linie III-III in Fig. 2 ein erstes Ausführungsbeispiel des an dem Haltearm ausgebildeten Vorsprunges,
- Fig. 4: ein zweites Ausführungsbeispiel des an dem Haltearm ausgebildeten Vorsprunges analog zu Fig. 3 und
- Fig. 5: als horizontalen Schnitt ein Ausführungsbeispiel einer Endkralle eines Traggestells.

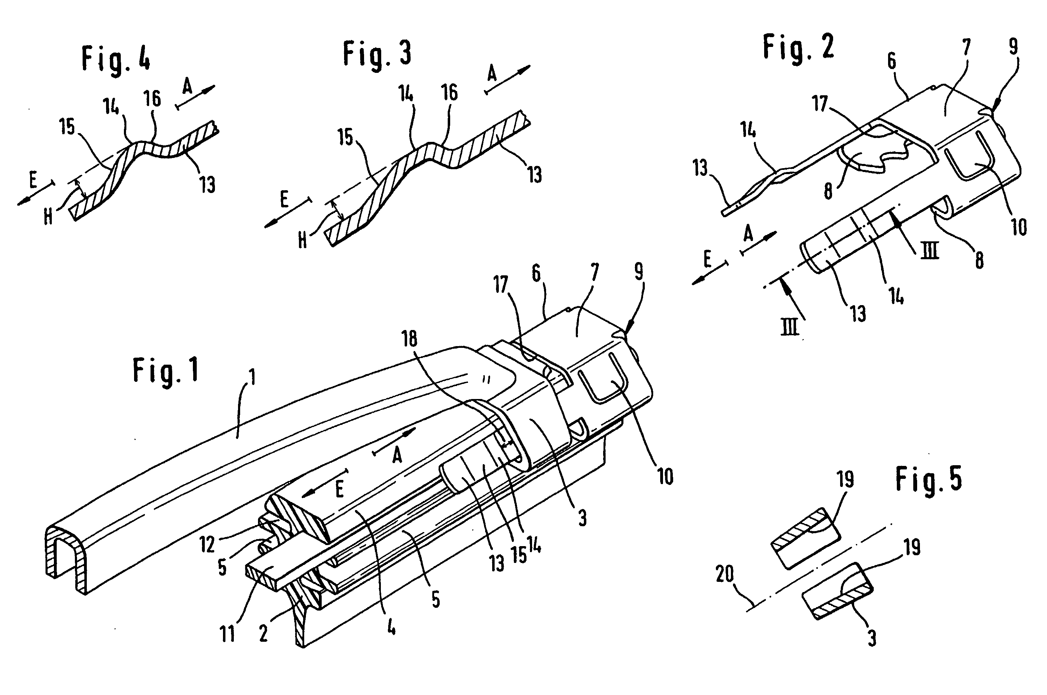

In Fig. 1 ist ein Endabschnitt eines Wischblattes für eine Scheibenwischvorrichtung zum Reinigen einer Scheibe an einem Fahrzeug gezeigt. Das Traggestell 1, das eingliedrig oder mehrgliedrig ausgebildet sein kann, ist mit Krallen zum Halten und Führen einer Wischleiste 2 aus elastischem, gummiartigen Material ausgestattet. Die Krallen des Traggestells 1, die in der Art der in Fig. 1 sichtbaren Endkralle 3 ausgebildet sind, halten die zu der Wischleiste 2 gehörende Kopfleiste 4, indem sie von oben her die Kopfleiste 4 zumindest teilweise umgreifen und in Längsnuten 5 eingreifen, die an den gegenüberliegenden Längsseiten der Kopfleiste 4 ausgebildet sind. Um die Wischleiste 2 an dem Traggestell 1 zu montieren, wird dieser von dem in Fig. 1 gezeigten Ende des Traggestells 1 her in die Endkralle 3 und die anderen Krallen des Traggestells eingeführt. Durch einen entsprechenden Pfeil ist in Fig. 1 die Einschubrichtung E gekennzeichnet, welche in Längsrichtung der Wischleiste 2 bzw. der Kopfleiste 4 verläuft.

Da die Wischleiste 2 verliersicher an dem Traggestell 1 gehalten sein muß, ist eine Längsarretierung der Wischleiste 2 bzw. der Kopfleiste 4 an dem Traggestell 1 erforderlich. Dazu dient eine Endklammer 6, die dauerhaft auf dem einen Ende der zu der Wischleiste 2 gehörenden Kopfleiste 4 befestigt ist. Die Endklammer 6 (siehe auch Fig. 2) ist aus Blech gefertigt und weist einen gehäuseartigen Kopfteil 7 auf, der im wesentlichen an die Außenkontur des Endabschnittes der Kopfleiste 4 angepaßt ist. Der Kopfteil 7 umgreift von oben her den Endabschnitt der Kopfleiste 4 und greift mit den gegenüberliegenden Krallen 8 in die gleichen Längsnuten 5 der Kopfleiste 4 ein, die für die Krallen des Traggestells 1 bestimmt sind. Durch eine plastische Verformung des Kopfteils 7 in Richtung der Krallen.8 wird die Endklammer fest auf der Kopfleiste 4 verklemmt. Die an den Krallen 8 der Endklammer 6 ausgebildeten Zähne drücken sich dabei in das Material der Kopfleiste ein und sorgen für einen festen Sitz der Endklammer 6 auf der Kopfleiste 4. Zur weiteren Erhöhung der Stabilität dieser Befestigung liegt der Kopfteil 7 mit einer stirnseitigen Wand 9 an der Stirnseite der Kopfleiste 4 an, wodurch ein verbesserter Formschluß erreicht wird.

Aus den gegenüberliegenden Seitenwänden des Kopfteiles 7 sind noch zungenartige Befestigungsabschnitte 10 freigeschnitten, von denen in den Fig. 1 und 2 jeweils nur einer sichtbar ist. Diese Befestigungsabschnitte 10 sind dazu bestimmt, eine oder zwei Federschienen 11 in Längsrichtung an dem Ende der Kopfleiste 4 zu arretieren. Entweder ist nur eine Federschiene 11 in einem umfangsseitig geschlossenen Längskanal der Kopfleiste angeordnet oder es sind, wie bei dem Ausführungsbeispiel von Fig. 1, zwei Federschienen 11 vorgesehen. Im letzteren Fall sind die Federschienen 11, von denen in Fig. 1 nur eine sichtbar ist, in jeweils eine weitere, an den gegenüberliegenden Längsseiten der Kopfleiste 4 ausgebildete Längsnut 12 eingelegt. Gegen seitliches Herausgleiten werden diese zwei Federschienen 11 durch die Krallen des Traggestells 1 gesichert. Für die erforderliche Längsarretierung der Federschienen 11 werden die an der Endklammer 6 ausgebildeten Befestigungsabschnitte 10 plastisch nach einwärts verformt. In dem in Fig. 1 gezeigten Ausführungsbeispiel greifen dann die Befestigungsabschnitte 10 in korrespondierende Ausnehmungen an den Enden der Federschienen 11 ein. Im Falle der nicht dargestellten Variante mit nur einer in einem Längskanal der Kopfleiste angeordneten Federschiene wird durch die plastische Verformung der Befestigungsabschnitte 10 Material der Kanalwand in entsprechende seitliche Ausnehmungen der einen Federschiene eingedrückt. Somit kann ein komplett vorgefertigter Austauschsatz bestehend aus Wischleiste 2, federschiene bzw. Federschienen 11 und Endklammer 6 als einfach handhabbare Baueinheit bereitgestellt werden.

Von besonderer Bedeutung im Hinblick auf die Erfindung ist die Ausbildung des wenigstens einen zu der Endklammer 6 gehörenden Haltearmes 13, wobei im vorliegenden Ausführungsbeispiel zwei Haltearme 13 vorgesehen sind. Die Haltearme 13 gehen von dem Kopfteil 7 der Endklammer 6 aus und erstrecken sich in Längsrichtung der Kopfleiste 4 entlang der gegenüberliegenden Längsseiten der Kopfleiste 4. An den Enden der Haltearme 13 ist in gleicher Weise jeweils ein Vorsprung 14 ausgebildet, der dazu bestimmt ist, als Anschlagmittel zum Zweck der Längsarretierung der Wischleiste 2 an dem Traggestell 1 mit der Endkralle 3 zusammenzuwirken. Wie aus den schematisierten Darstellungen der Fig. 3 und 4 ersichtlich ist, gehören zu jedem Vorsprung 14 eine Einführungsfläche 15 und eine Auszugsfläche 16, die in bezug auf die höchste Erhebung des Vorsprungs 14 gegenüberliegend angeordnet sind. Die Längsarretierung der Wischleiste 2 an dem Traggestell 1 wird dadurch bewirkt, daß die Haltearme 13, wie aus Fig. 1 ersichtlich, die Endkralle 3 des Traggestells 1 queren und die Vorsprünge 14 die innere Stirnseite der Endkralle 3 hintergreifen. Während ein Bereich des Kopfteiles 7 der Endklammer 6, beispielsweise dessen innere Stirnseite 17, als Anschlag mit der äußeren Stirnseite der Endkralle 3 zusammenwirkt und die Wischleiste 2 in Einschubrichtung E blokkiert, wirkt der Vorsprung 14 und dabei speziell dessen Auszugsfläche 16 als Anschlagmittel mit der inneren Stirnseite der Endkralle 3 zusammen und verhindert ein Herausgleiten der Wischleiste 2 aus dem Traggestell 1 in der mit einem Pfeil gekennzeichneten Auszugsrichtung A.

Bei der in Fig. 1 dargestellten, bevorzugten Ausführungsform der Erfindung liegen die Haltearme 13 auf den gegenüberliegenden Längsseiten der Kopfleiste 4 auf und queren die Endkralle 3 an deren Innenseite. Dadurch ist einerseits eine besonders konturenenge Bauweise und andererseits eine besonders sichere Arretierung der Wischleiste 2 am Traggestell 1 gewährleistet. Diese Ausführung ermöglicht weiterhin, für die Endklammer 6 ein Metallblech mit relativ geringen elastischen Rückstellkräften zu verwenden, weil sich die Haltearme 13 an der Kopfleiste 4 abstützen und damit durch die elastischen Rückstellkräfte der Kopfleiste in Arretierungsposition gebracht bzw. gehalten werden. In Fig. 1 ist noch ein kleines Längsspiel 18 zwischen der Endklammer 6 und der Endkralle 3 erkennbar. Dieses Längsspiel 18, das die Funktion des Wischblattes nicht beeinträchtigt, kann vorteilhaft zum Ausgleich maßlicher Toleranzen verwendet werden.

In den Fig. 3 und 4 sind schematisiert zwei Beispiele für verschiedene mögliche Formen der an den Haltearmen 13 der Endklammer 6 ausgebildeten Vorsprünge 14 dargestellt. Während in Fig. 3 die Einführungsfläche 15 und die Auszugsfläche 16 ebenflächig ausgebildet sind, sind sie in Fig. 4 konvex gerundet. In beiden Fällen ist der Vorsprung 14 in Form einer Auswölbung hergestellt. Bei Herstellung der Endklammer 6 aus Blech kann dies durch einen einfachen Prägevorgang erreicht werden. Im Falle der Herstellung einer Endklammer als Spritzgußteil aus Kunststoffmaterial wird an dieser Stelle eine Materialanhäufung vermieden, welche ansonsten beim Erstarrungsprozeß durch Materialschwindung zu einer die Funktion beeinträchtigenden Veränderung der wirksamen Oberfläche des Vorsprunges 14 führen könnte.

Von besonderer Bedeutung für die Erfindung ist auch, daß die Auszugsfläche 16 des an dem Haltearm 13 der Endklammer 6 ausgebildeten Vorsprunges 14 in bezug auf die Längsrichtung der Wischleiste 2 eine Steigung von kleiner als 90° aufweist. Bei einer konkav und/oder konvex gewölbt ausgebildeten Auszugsfläche 16 müßte die Steigung an jedem Punkt der Auszugsfläche 16 kleiner als als 90° sein. Speziell diese Ausbildung bewirkt, daß beim Entfernen einer zu ersetzenden Wischleiste 2 aus dem Traggestell 1, das heißt beim Ausziehen der Wischleiste 2 und damit der Endklammer 6 aus dem Traggestell in Auszugsrichtung A, der Haltearm 13 selbsttätig derartig elastisch in Richtung der Kopfleiste 4 ausgelenkt wird, daß der Vorsprung 14 die Innenseite der Endkralle 3 des Traggestells 1 passieren kann. Beim Ausziehen der Endklammer 6 in Auszugsrichtung A gelangt die Auszugsfläche 16 in Anlage an die innere Stirnkante der Endkralle 3. Im weiteren gleitet die Auszugsfläche 16 entlang dieser Stirnkante, und aufgrund der vorstehend erwähnten Steigung dieser Auszugsfläche wird der Haltearm 13 so lange entgegen den wirkenden elastischen Rückstellkräften ausgelenkt, bis der höchste Punkt des Vorsprunges 14 die innere Stirnkante bzw. die Innenseite der Endkralle passieren kann. Wichtig ist es, die Höhe H des Vorsprunges 14 und die Steigung der Auszugsfläche 16 so festzulegen, daß beim normalen Betrieb des Scheibenwischers eine genügend große Rückhaltekraft wirkt, um die Wischleiste 2 verliersicher an dem Traggestell 1 zu halten, daß aber andererseits die für das Lösen der Längsarretierung erforderliche Auszugskraft nur so groß ist, daß das Ausziehen der Wischleiste 2 mit der Endklammer 6 aus dem Traggestell 1 durch eine einfache manuelle Handhabung ohne zusätzliches Werkzeug realisierbar ist.

Im Rahmen der Erfindung sind vielerlei Gestaltungen des Vorsprunges 14 an dem Haltearm 13 der Endklammer 6 möglich. Eine symmetrische Ausführung des Vorsprunges 14 mit spiegelbildlichem Aufbau der Einführungsfläche 15 und der Auszugsfläche 16 hätte sicher den Vorteil einer einfachen Herstellbarkeit. Bevorzugt wird aber eine unsymmetrische Ausführung des Vorsprunges 14, wobei die Steigung der Auszugsfläche 16 deutlich größer ist als die Steigung der Einführungsfläche 15. Durch eine solche Ausgestaltung des Vorsprunges 14, die besonders deutlich aus der schematisierten Darstellung von Fig. 3 ersichtlich ist, wird erreicht, daß für die Herstellung der Längsarretierung durch Einschieben der Haltearme 13 in die Endkralle 3 des Traggestells in Einschubrichtung E eine wesentlich geringere Kraft erforderlich ist als für das Lösen dieser Arretierung durch Ausziehen der Endklammer 6 in Auszugsrichtung A. Das Einführen der Haltearme 13 in die Endkralle 3 und damit die Herstellung der Längsarretierung zwischen Wischleiste 2 und Traggestell 1 kann noch weiter dadurch vereinfacht bzw. erleichtert werden, daß, wie in Fig. 5 in übertriebenem Größenverhältnis gezeigt, an der Endkralle 3 eine Einführungsschräge 19 ausgebildet ist. In einfachster Weise ist die Einführungsschräge 19 dadurch hergestellt, daß die gegenüberliegenden Flanken der Endkralle 3 in bezug auf die Mittellinie 20 zur äußeren Stirnseite der Endkralle 3 hin aufgeweitet sind.

Auf die verschiedenen Gestaltungsmöglichkeiten des an dem Haltearm 13 der Endklammer 6 ausgebildeten Vorsprunges 14 zurückkommend, ist noch zu bemerken, daß durch die Wahl verschiedener konvex und/oder konkav gewölbter Ausbildungen der Einführungsfläche 15 und/oder der Auszugsfläche 16, insbesondere jedoch der Auszugsfläche 16, der Kräfteverlauf der Einführungskräfte, insbesondere jedoch der Auszugskräfte bzw. Rückhaltekräfte, durch die sich über die Länge der Einführungsfläche 15 bzw. Auszugsfläche 16 ständig ändernde Steigung an unterschiedliche Verhältnisse und Bedingungen angepaßt werden kann.

Es ist noch zu bemerken, daß die Endklammer 6 auch mit nur einem Haltearm 13 versehen sein kann, der dann vorzugsweise mittig auf dem Rücken der zu der Wischleiste 2 gehörenden Kopfleiste 4 angeordnet sein sollte.

Der konstruktive Aufbau, die Handhabung und die Funktion eines komplett vormontierten Austauschsatzes, auf den sich die Erfindung auch bezieht, ist ebenfalls aus der Zeichnung und der vorstehenden Beschreibung ersichtlich, so daß diese Dinge nicht noch einmal gesondert dargestellt und beschrieben werden müssen.

### Bezugszeichenliste

- 1: Traggestell
- 2: Wischleiste
- 3: Endkralle
- 4: Kopfleiste
- 5: Längsnut
- 6: Endklammer
- 7: Kopfteil
- 8: Kralle
- 9: stirnseitige Wand
- 10: Befestigungsabschnitt
- 11: Federschiene
- 12: Längsnut
- 13: Haltearm
- 14: Vorsprung
- 15: Einführungsfläche
- 16: Auszugsfläche
- 17: Stirnseite
- 18: Längsspiel
- 19: Einführungsschräge
- 20: Mittellinie
- A: Auszugsrichtung
- E: Einschubrichtung
- H: Höhe

## Patentansprüche

1. Wischblatt für eine Scheibenwischvorrichtung zum Reinigen einer Scheibe an einem Fahrzeug mit einer auswechselbaren Wischleiste (2) aus elastischem, gummiartigen Material, die an einem langgestreckten Traggestell (1) gehalten ist, indem Haltekrallen des Traggestells (1) die zu der Wischleiste (2) gehörende Kopfleiste (4) von oben her zumindest teilweise umfassen und in an den gegenüberliegenden Längsseiten der Kopfleiste (4) ausgebildete Längsnuten (5) eingreifen und eine auf einem Ende der Kopfleiste (4) befestigte Endklammer (6) die Wischleiste (2) in bezug auf ihre Längsrichtung unverlierbar an dem Traggestell (1) hält, wobei wenigstens ein sich in Längsrichtung der Kopfleiste (4) erstreckender, zu der Endklammer (6) gehörender Haltearm (13) die zugeordnete Endkralle (3) des Traggestells (1) quert und mit einem Anschlagmittel die innere Stirnseite der Endkralle (3) hintergreift, **dadurch gekennzeichnet, daß** das Anschlagmittel an dem wenigstens einen Haltearm (13) der Endklammer (6) ein Vorsprung (14) mit einer Einführungsfläche (15) und mit einer Auszugsfläche (16) ist, die in bezug auf die Längsrichtung der Kopfleiste (4) jeweils eine zueinander gegenläufige Steigung aufweisen und im Zusammenwirken mit der Endkralle (3) des Traggestells (1) beim Einschieben der Kopfleiste (4) in das Traggestell (1) und beim Ausziehen der Kopfleiste (4) aus dem Traggestell (1) selbsttätig ein vorübergehendes elastisches Auslenken des wenigstens einen Haltearmes (13) aus seiner Normalstellung herbeiführen, so daß der Vorsprung (14) die Endkralle (3) passieren kann.

2. Wischblatt nach Anspruch 1, **dadurch gekennzeichnet, daß** die Endklammer (6) aus Blech gefertigt ist.

3. Wischblatt nach Anspruch 2, **dadurch gekennzeichnet, daß** die Endklammer (6) mit einem Kopfteil (7) das Ende der zu der Wischleiste (2) gehörenden Kopfleiste (4) zumindest teilweise umfaßt und daß gegenüberliegende, vorzugsweise mit Zähnen besetzte, Krallen (8) der Endklammer (6) in die für die Haltekrallen des Traggestells (1) bestimmten Längsnuten (6) der Kopfleiste (4) eingreifen und durch plastische Verformung an der Kopfleiste (4) festgeklemmt sind.

4. Wischblatt nach einem der vorhergehenden Ansprüche, **dadurch gekennzeichnet, daß** die Endklammer (6) als einziges, einstückiges Bauteil ausgebildet und ohne Verwendung zusätzlicher Bauteile an der zu der Wischleiste (2) gehörenden Kopfleiste (4) befestigt ist.

5. Wischblatt nach einem der vorhergehenden Ansprüche, **dadurch gekennzeichnet, daß** die Endklammer (6) mit Mitteln zur Längsarretierung einer in einem am Umfang geschlossenen Längskanal der Kopfleiste angeordneten Federschiene oder zweier in an den gegenüberliegenden Längsseiten der Kopfleiste (4) ausgebildeten Längsnuten (12) angeordneter Federschienen (11) ausgestattet ist.

6. Wischblatt nach einem der vorhergehenden Ansprüche, **dadurch gekennzeichnet, daß** die Höhe (H) des Vorsprunges (14) an dem wenigstens einen Haltearm (13) und/oder die Steigung der Auszugsfläche (15) des Vorsprunges (14) in Abhängigkeit von der gewünschten Größe der für das Ausziehen der Kopfleiste aus den Haltekrallen des Traggestells (1) erforderlichen Auszugskraft festgelegt ist, wobei vorzugsweise die Steigung der Auszugsfläche (16) größer ist als die Steigung der Einführungsfläche (15).

7. Wischblatt nach einem der vorhergehenden Ansprüche, **dadurch gekennzeichnet, daß** die Einführungsfläche (15) und/oder die Auszugsfläche (16) des Vorsprunges (14) an dem wenigstens einen Haltearm (13) der Endklammer (6) konvex und/oder konkav gewölbt ist.

8. Wischblatt nach einem der vorhergehenden Ansprüche, **dadurch gekennzeichnet, daß** der Vorsprung (14) an dem wenigstens einen Haltearm (13) der Endklammer (6) durch eine Auswölbung gebildet ist.

9. Wischblatt nach einem der vorhergehenden Ansprüche, **dadurch gekennzeichnet, daß** der wenigstens eine Haltearm (13) der Endklammer (6) die Endkralle (3) des Traggestells (1) an deren Innenseite quert.

10. Wischblatt nach Anspruch 8, **dadurch gekennzeichnet, daß** sich der wenigstens eine Haltearm (13) der Endklammer (6) zumindest während des Einschiebens oder Ausziehens der Endklammer (6) in die oder aus der Endkralle (3) an der Außenseite der zu der Wischleiste (2) gehörenden Kopfleiste (4) abstützt.

11. Wischblatt nach einem der vorhergehenden Ansprüche, **dadurch gekennzeichnet, daß** die Endklammer (6) mit zwei Haltearmen (13) ausgebildet ist, die entlang der gegenüberliegenden Längsseiten der zu der Wischleiste (2) gehörenden Kopfleiste (4) verlaufen.

12. Wischblatt nach einem der vorhergehenden Ansprüche, **dadurch gekennzeichnet, daß** an der der Endklammer (6) zugeordneten Endkralle (3) des Traggestells (1) eine Einführungsschräge (19) für den wenigstens einen Haltearm (13) der Endklammer (6) ausgebildet ist, vorzugsweise jedoch an den beiden gegenüberliegenden Endkrallen (3) des Traggestells (1).

13. Austauschsatz für ein Wischblatt einer Scheibenwischvorrichtung zum Reinigen einer Scheibe an einem Fahrzeug, wobei zu dem komplett vormontierten Austauschsatz eine Wischleiste (2) aus elastischem, gummiartigen Material, eine oder mehrere in der zu der Wischleiste (2) gehörenden Kopfleiste (4) angeordnete und gehaltene Federschiene (11) bzw. Federschienen (11) und eine auf einem Ende der Kopfleiste (4) befestigte Endklammer (6) zum Fixieren der Federschiene (11) bzw. Federschienen (11) an der Kopfleiste (4) und zur Längsarretierung der Wischleiste (2) an dem Traggestell (1) des Wischblattes gehören, wobei die Endklammer (6) wenigstens einen sich in Längsrichtung der Kopfleiste (4) erstreckenden Haltearm (13) besitzt, der nach der Montage des Austauschsatzes an dem Traggestell (1) die zugeordnete Endkralle (3) des Traggestells (1) quert und mit einem Anschlagmittel die innere Stirnseite der Endkralle (3) hintergreift, **dadurch gekennzeichnet, daß** der Austauschsatz mit den kennzeichnenden Merkmalen eines der Ansprüche 1 bis 11 ausgebildet ist.

## Claims

1. Wiper blade for a windscreen wiping device for cleaning a windscreen on a vehicle with an exchangeable wiper strip (2) made of elastic, rubber-like material held on an elongate carrying frame (1), in that retaining claws of the carrying frame (1) at least partially enclose from above the head strip (4) pertaining to the wiper strip (2) and engage in longitudinal grooves (5) constructed on the opposing longitudinal sides of the head strip (4) and a terminal clip (6) fastened to one end of the head strip (4) captively retains the wiper strip (2) with respect to its longitudinal direction on the carrying frame (1), at least one retaining arm (13) extending in the longitudinal direction of the head strip (4) and pertaining to the terminal clip (6) crossing the associated terminal claw (3) of the carrying frame (1) and engaging behind the inner end face of the terminal claw (3) with a stop means, **characterised in that** the stop means on the at least one retaining arm (13) of the terminal clip (6) is a projection (14) with an introductory face (15) and with a withdrawal face (16) which, with respect to the longitudinal direction of the head strip (4), have a respective, mutually opposed incline and when the head strip (4) is inserted into the carrying frame (1) and when the head strip (4) is withdrawn from the carrying frame (1) can, in cooperation with the terminal claw (3) of the carrying frame (1), automatically bring about temporary elastic deflection of the at least one retaining arm (13) from its normal position so the projection (14) can pass the terminal claw (3).

2. Wiper blade according to claim 1, **characterised in that** the terminal clip (6) is manufactured from sheet metal.

3. Wiper blade according to claim 2, **characterised in that** the terminal clip (6) at least partially encloses with a head part (7) the end of the head strip (4) pertaining to the wiper strip (2) and that opposing claws (8) of the terminal clip (6) preferably equipped with teeth, engage in the longitudinal grooves (6) of the head strip (4) intended for the retaining claws of the carrying frame (1) and are securely fixed on the head strip (4) owing to plastic deformation.

4. Wiper blade according to any of the preceding claims, **characterised in that** the terminal clip (6) is constructed as a single, one-piece component and is fastened without using additional components to the head strip (4) pertaining to the wiper strip (2).

5. Wiper blade according to any of the preceding claims, **characterised in that** the terminal clip (6) is equipped with means for longitudinal locking of a spring rail arranged in a longitudinal channel of the head strip closed at the periphery or two spring rails (11) arranged in longitudinal grooves (12) constructed at the opposing longitudinal sides of the head strip (4).

6. Wiper blade according to any of the preceding claims, **characterised in that** the height (H) of the projection (14) on the at least one retaining arm (13) and/or the incline of the withdrawal face (15) of the projection (14) is fixed as a function of the desired size of the withdrawal force required for withdrawing the head strip from the retaining claws of the carrying frame (1), the incline of the withdrawal face (16) preferably being larger than the incline of the introductory face (15).

7. Wiper blade according to any of the preceding claims, **characterised in that** the introductory face (15) and/or the withdrawal face (16) of the projection (14) is convex and/or concave at the at least one retaining arm (13) of the terminal clip (6).

8. Wiper blade according to any of the preceding claims, **characterised in that** the projection (14) at the at least one retaining arm (13) of the terminal clip (6) is formed by a bulge.

9. Wiper blade according to any of the preceding claims, **characterised in that** the at least one retaining arm (13) of the terminal clip (6) crosses the terminal claw (3) of the carrying frame (1) at the inner side thereof.

10. Wiper blade according to claim 8, **characterised in that** the at least one retaining arm (13) of the terminal clip (6) is supported on the outer side of the head strip (4) pertaining to the wiper strip (2), at least during insertion or withdrawal of the terminal clip (6) into or from the terminal claw (3).

11. Wiper blade according to any of the preceding claims, **characterised in that** the terminal clip (6) is constructed with two retaining arms (13) extending along the opposing longitudinal sides of the head strip (4) pertaining to the wiper strip (2).

12. Wiper blade according to any of the preceding claims, **characterised in that** an introductory bevel (19) for the at least one retaining arm (13) of the terminal clip (6) is constructed at the terminal claw (3) of the carrying frame (1) associated with the terminal clip (6), but preferably at the two opposing terminal claws (3) of the carrying frame (1).

13. Exchange unit for a wiper blade of a windscreen wiping device for cleaning a windscreen on a vehicle, wherein the complete, preassembled exchange unit includes a wiper blade (2) made of elastic, rubber-like material, one or more spring rails (11) arranged and held in the head strip (4) pertaining to the wiper strip (2) and a terminal clip (6) fastened to one end of the head strip (4) for fixing the spring rail (11) or spring rails (11) to the head strip (4) and for longitudinally locking the wiper strip (2) to the carrying frame (1) of the wiper blade, the terminal clip (6) having at least one retaining arm (13) extending in the longitudinal direction of the head strip (4) and, after assembly of the exchange unit on the carrying frame (1), crossing the associated terminal claw (3) of the carrying frame (1) and engaging behind the inner end face of the terminal claw (3) with a stop means,
**characterised in that** the exchange unit is constructed with the characterising features of one of claims 1 to 11.

## Revendications

1. Balai d'essuie- glace pour dispositif d'essuie- glace destiné au nettoyage d'une glace sur un véhicule, comportant une baguette échangeable d'essuie- glace (2), en un matériau élastique du type caoutchouc, qui est soutenue par un bâti de support (1) s'étendant longitudinalement, tandis que des griffes de soutien du bâti de support (1) enveloppent à partir du haut, au moins partiellement, la moulure supérieure (4) appartenant à la baguette d'essuie- glace (2) et sont en prise dans des rainures longitudinales (5) agencées sur les côtés longitudinaux opposés de la moulure supérieure (4), et un crampon d'extrémité (6) fixé sur une extrémité de la moulure supérieure (4) soutient la baguette d'essuie- glace (2) sur le bâti de support (1) de façon imperdable dans sa direction longitudinale, dans lequel au moins un bras de soutien (13) appartenant au crampon d'extrémité (6) et s'étendant suivant la direction longitudinale croise la griffe d'extrémité (3) associée au bâti de support (1) et est en prise par l'arrière par un moyen de butée avec le côté frontal intérieur de la griffe d'extrémité (3), **caractérisé en ce que** le moyen de butée sur le au moins un bras de soutien (13) du crampon d'extrémité (6) est une saillie (14) pourvue d'une surface de mise en place (15) et d'une surface d'extraction (16), qui présentent respectivement une inclinaison opposée l'une par rapport à l'autre dans la direction longitudinale de la moulure supérieure (4), et qui en coopération avec la griffe d'extrémité (3) du bâti de support (1), lors de l'insertion à glissement de la moulure supérieure (4) dans le bâti de support (1) et lors de l'extraction de la moulure supérieure (4) du bâti de support (1), créent automatiquement une excursion élastique momentanée du au moins un bras de soutien (13) hors de sa position normale, de sorte que la saillie (14) peut passer la griffe d'extrémité (3).

2. Balai d'essuie- glace selon la revendication 1, **caractérisé en ce que** le crampon d'extrémité (6) est fabriqué en tôle.

3. Balai d'essuie- glace selon la revendication 2, **caractérisé en ce que** le crampon d'extrémité (6) entoure au moins partiellement, par une pièce de tête (7), l'extrémité de la moulure supérieure (4) appartenant à la baguette (2) d'essuie- glace, et **en ce que** des griffes opposées (8) du crampon d'extrémité (6), de préférence garnies de dents, sont en prise dans les rainures longitudinales (5) de la moulure supérieure (4) agencées pour les griffes d'extrémité du bâti de support (1), et sont fixées par déformation plastique à la moulure supérieure (4).

4. Balai d'essuie- glace selon l'une des revendications précédentes, **caractérisé en ce que** le crampon d'extrémité (6) constitue une pièce de construction unique en un seul élément, et, sans utilisation de pièces de construction supplémentaires, est fixé à la moulure supérieure (4) appartenant à la baguette d'essuie- glace (2).

5. Balai d'essuie- glace selon l'une des revendications précédentes, **caractérisé en ce que** le crampon d'extrémité (6) est équipé de moyens d'arrêt longitudinal d'un rail élastique disposé dans un canal longitudinal de la moulure supérieure fermé sur son pourtour, ou de deux rails élastiques (11) disposés dans des rainures longitudinales (12) agencées sur les côtés longitudinaux opposés de la moulure supérieure (4).

6. Balai d'essuie- glace selon l'une des revendications précédentes, **caractérisé en ce que** la hauteur (H) de la saillie (14) sur le au moins un bras de soutien (13) et/ou l'inclinaison de la surface d'extraction (16) de la saillie (14), est établie en fonction de la grandeur souhaitée de la force d'extraction nécessaire à l'extraction de la moulure supérieure hors des griffes de soutien du bâti de support (1), l'inclinaison de la surface d'extraction (16) étant supérieure à l'inclinaison de la surface d'introduction (15).

7. Balai d'essuie-glace selon l'une des revendications précédentes, **caractérisé en ce que** la surface d'introduction (15) et/ou la surface d'extraction (16) de la saillie (14) du au moins un bras de soutien (13) du crampon d'extrémité (6) est cintrée de façon convexe et/ou concave.

8. Balai d'essuie- glace selon l'une des revendications précédentes, **caractérisé en ce que** la saillie (14) du au moins un bras de soutien (13) du crampon d'extrémité (6) est formée par une moulure bombée.

9. Balai d'essuie- glace selon l'une des revendications précédentes, **caractérisé en ce que** le au moins un bras de soutien (13) du crampon d'extrémité (6) croise la griffe d'extrémité (3) du bâti de support (1) sur le côté intérieur de celui-ci.

10. Balai d'essuie- glace selon la revendication 8, **caractérisé en ce que** le au moins un bras de soutien (13) du crampon d'extrémité (6) s'appuie dans la ou hors de la griffe d'extrémité (3), sur le côté extérieur de la moulure supérieure (4) appartenant à la baguette d'essuie- glace (2), au moins pendant l'introduction par glissement ou l'extraction du crampon d'extrémité (6).

11. Balai d'essuie- glace selon l'une des revendications précédentes, **caractérisé en ce que** le crampon d'extrémité (6) est conformé avec deux bras de soutien (13) qui s'étendent le long des côtés longitudinaux opposés de la moulure supérieure (4) appartenant à la baguette d'essuie- glace (2).

12. Balai d'essuie- glace selon l'une des revendications précédentes, **caractérisé en ce que** sur la griffe d'extrémité (3) du bâti de support (1) associée au crampon d'extrémité (6), est agencée une déclivité (19) de mise en place du au moins un bras de soutien (13) du crampon d'extrémité (6), de préférence cependant sur les deux griffes d'extrémité (3) opposées du bâti de support (1).

13. Ensemble de rechange pour essuie- glace d'un dispositif d'essuie- glace pour le nettoyage d'une glace d'un véhicule, dans lequel appartiennent à l'ensemble de rechange complet pré- monté, une baguette d'essuie- glace (2) en un matériau élastique du type caoutchouc, un ou plusieurs rail(s) élastique(s) (11) disposés et soutenus dans la moulure supérieure (4) appartenant à la baguette d'essuie- glace (2), et un crampon d'extrémité (6) fixé à une extrémité de la moulure supérieure (4) pour la fixation du rail élastique (11) ou des rails élastiques (11) sur la moulure supérieure (4) et pour l'arrêt longitudinal de la baguette d'essuie- glace (2) sur le bâti de support (1) du balai d'essuie- glace, dans lequel le crampon d'extrémité (6) possède au moins un bras de soutien (13) s'étendant dans la direction longitudinale de la moulure supérieure (4), qui après le montage de l'ensemble de rechange sur le bâti de support (1), croise la griffe d'extrémité (3) du bâti de support (1) adjointe à celui-ci et est en prise par l'arrière, par un moyen de butée, avec le côté frontal intérieur de la griffe d'extrémité (3), **caractérisé en ce que** l'ensemble de rechange est réalisé avec les caractéristiques de l'une des revendications 1 à 11.
